# EUROPÄISCHE PATENTSCHRIFT

(11) **EP 1 935 745 B1**
(45) Veröffentlichungstag und Bekanntmachung des Hinweises auf die Patenterteilung: **28.03.2012**
(21) Anmeldenummer: 07015253.3
(22) Anmeldetag: 03.08.2007
(51) Int. Cl.: F16F 1/12, F16F 1/41, B61F 5/30

(54) **Primärfeder**
Primary spring
Ressort principal

(30) Priorität: 23.11.2006 DE 102006055697
(43) Veröffentlichungstag der Anmeldung: 25.06.2008
(73) Patentinhaber: Carl Freudenberg KG, 69469 Weinheim (DE)
(72) Erfinder: Marziller, Wolfgang, 13055 Berlin (DE); Erl, Andreas, 16761 Henningsdorf (DE); Hack, Rüdiger, 10713 Berlin (DE); Gürtler, Daniel, 12057 Berlin (DE)

(56) Entgegenhaltungen:
- EP-A1- 0 124 427
- EP-A2- 0 855 327
- BE-A- 681 843
- DE-B- 1 249 313
- DE-C- 942 932

## Beschreibung

### Technisches Gebiet

Die Erfindung betrifft eine Primärfeder zum Einsatz in Drehgestellen schienengebundener Fahrzeuge, umfassend ein Traglager und ein Auflager die durch eine konusförmige Feder aus einem elastomeren Material miteinander verbunden sind, wobei dem Auflager und/oder dem Traglager eine Einrichtung zur Höhenanpassung der Primärfeder zugeordnet ist.

### Stand der Technik

Derartige Primärfedern sind allgemein bekannt. Die Federn umfassen Federkörper, die zumeist konisch ausgebildet sind und die durch Metalleinlagen verstärkt sein können. Die Federkörper bestehen aus einem elastomeren Material, beispielsweise Naturkautschuk. Aufgrund der hohen statischen und dynamischen Belastungen weisen derartige Federkörper eine Setzneigung auf. Bei einer hohen Bauraumausnutzung kann auch ein entsprechendes Setzverhalten dazu führen, dass sich die durch die Primärfeder getrennten Bauteile berühren. Daher müssen die Höhen dieser Primärfedem durch aufwendige Wartungsarbeiten angepasst werden.

Eine Primärfeder der gattungsgemäßen Art ist aus der Druckschrift EP 0 855 327 A2 bekannt. Die EP 0 855 327 A2 offenbart eine Federungsvorrichtung für ein Schienenfahrzeug. Bei dieser Federungsvorrichtung wird zwischen dem Rahmen eines Schienenfahrzeugs oder eines Dn:hgestells und dem Achslager eine Gummirollfeder angeordnet, die einen Gummirollring aufweist, der auf einem Dorn angebracht ist und sich gegen ein Gehäuse abstützt. Das Gehäuse der Gummirollfeder wird mittels einer Abdeckplatte druckdicht abgeschlossen, wodurch ein als Luftfeder benutzbarer Druckraum gebildet wird. Der Druckraum der Luftfeder kann mit einer Sensorik zur Weg-, Druck- oder Schwingungsmessung und mit einem Mittel zur Niveauregulierung ausgestattet werden.

Aus der Druckschrift EP 0 124 427 A1 ist eine Lagerung mit einem Traglager und einem Auflager bekannt, die durch eine konusförmige Feder miteinander verbunden sind. Es ist eine Einrichtung zur Höhenanpassung der Primärfeder vorgesehen, die eine Druckkammer im Inneren der Lagerung aufweist, so dass die Höhenanpassung durch Einstellen eines Drucks im Inneren der Lagerung vorgenommen werden kann.

Die Druckschrift DE 942 932 C betrifft eine Abfederung für Schienenfahrzeuge mit einem zwischen zwei Metallteilen angeordneten Gummikörper, wobei eines der Metallteile durch eine Schraubverbindung befestigbar ist. Das betreffende Metallteil kann mithilfe einer Schraube und einer daran angebrachten Mutter in seiner Position verstellt werden.

Auch aus der Druckschrift BE ü81 843 A ist eine Lagerung mit einem zwischen zwei Metallteilen angeordneten Federkörper bekannt.

Die Druckschrift DE 12 49 313 B offenbart eine Laufwerkfederung für Schienenfahrzeuge, wobei jedem Radsatz ein eigener Zwischenrahmen zugeordnet ist, in dem der Radsatz geführt, gelagert und abgefedert ist, wobei der Zwischenrahmen mit dem Fahrzeug- bzw. Drehgestellrahmen ausschließlich durch mehrere und identische federnde Stützen verbunden ist, die federnde Bewegungen des Zwischenrahmens gegenüber dem Fahrzeugrahmen in jeder der drei Fahrzeughauptachsen sowie federnde Drehungen um eine vertikale Drehachse zulassen.

Der Erfindung liegt die Aufgabe zugrunde, eine Primärfeder der gattungsgemäßen Art so weiterzuentwickeln, dass die die Höhenanpassung mit einem möglichst geringen Aufwand an zugeführter Energie möglich ist.

Diese Aufgabe wird durch die Merkmale von Anspruch 1 gelöst. Auf vorteilhafte Ausgestaltungen nehmen die Unteransprüche Bezug.

Zur Lösung ist dem Auflager und/oder dem Traglager eine Einrichtung zur Höhenanpassung der Primärfeder zugeordnet. Die Einrichtung ist direkt und vorzugsweise ortsfest an der Primärfeder befestigt und ermöglicht somit ein einfaches Ausgleichen des Setzverhaltens des Federkörpers. Dabei entfällt das Montieren von Ausgleichsscheiben oder ähnlichem. Die Einrichtung kann derart ausgestaltet sein, dass die Höhenanpassung kontinuierlich, das heißt auch während des Fahrbetriebes oder in Abständen, vorzugsweise während der Wartungsarbeiten erfolgt.

Die Einrichtung ist hydraulisch verstellbar. Dabei umfasst die Einrichtung eine Kolben-/Zylindereinheit, wobei der Kolben druckgesteuert verstellbar ist. Die so ausgebildete Einrichtung ist ebenfalls vorzugsweise an dem Traglager montiert. Die Einrichtung ist besonders einfach ausgebildet und ermöglicht ebenfalls ein präzises Regulieren der Höhe. Die Druckgeber zum Regulieren der Kolben-/Zylindereinheit können entfernt von den Primärfedem angeordnet sein und es können mehrere Primärfedern miteinander verkoppelt sein und durch einen Druckgeber reguliert werden.

Die Einrichtung kann zumindest eine Messeinrichtung zur Abstandsmessung umfassen. Die Abstandsmessung kann beispielsweise durch ein optisches Messverfahren erfolgen. Es ist denkbar, dass zwei Messeinrichtungen vorgesehen sind, von denen eine erste Messeinrichtung die Relativposition zwischen Traglager und Flansch erfasst und eine zweite Messeinrichtung könnte die Relativposition zwischen Traglager und Auflager der Primärfeder erfassen. Die Messwerte können dynamisch erfasst werden, wobei vorzugsweise bei einer Messung der Relativposition zwischen Traglager und Auflager die Änderung der Relativposition zwischen Traglager und Flansch berücksichtigt wird.

Die Höhenanpassung der Einrichtung kann in Abhängigkeit des durch die Messeinrichtung bestimmten Abstands erfolgen. Die Messeinrichtung kann in die Einrichtung integriert sein.

### Kurzbeschreibung der Zeichnung

Einige Ausführungsbeispiele der erfindungsgemäßen Primärfeder sind nachfolgend anhand der Figuren näher erläutert. Diese zeigen, jeweils schematisch:
Fig. 1 eine Primärfeder mit einer Schraubverstellung; die nicht Gegenstand der Erfindung ist;
Fig. 2 eine Primärfeder mit einer hydraulischen Verstellung;
Fig. 3 eine mechanische Sicherung für die Einrichtung;
Fig. 4 eine Messeinrichtung für die Einrichtung.

### Ausführung der Erfindung

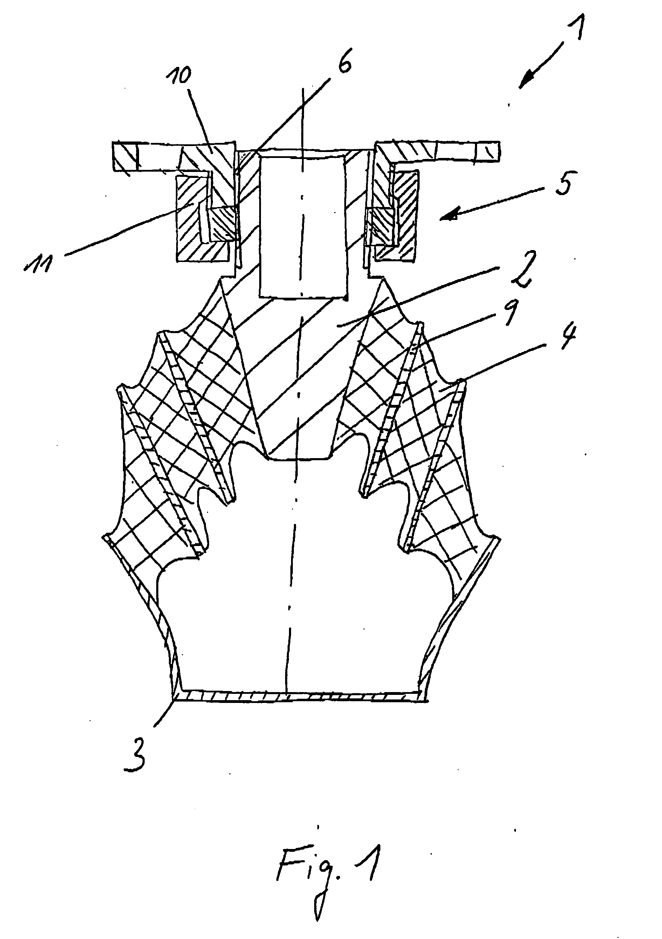

Figur 1 zeigt eine Primärfeder 1 zum Einsatz in Drehgestellen schienengebundener Fahrzeuge. Die Primärfeder 1 umfasst ein Traglager 2 und ein Auflager 3 die durch eine konusförmige Feder 4 miteinander verbunden sind. In die Feder 4 sind metallische Einlagen 9 integriert. Dem Auflager 2 ist eine Einrichtung 5 zur Höhenanpassung der Primärfeder 1 zugeordnet. In dieser Ausführung, die nicht Gegenstand der Erfindung ist, umfasst die Einrichtung 5 ein Gewinde 6, welches an dem Auflager 2 angeordnet ist. Über das Gewinde 6 ist ein Flansch 10 mit dem Auflager 2 verbunden durch den die Primärfeder 1 an dem Drehgestell eines Schienenfahrzeuges befestigt wird. Die Einrichtung 5 wird in dieser Ausführung manuell betätigt. Die Einrichtung 5 umfasst ferner eine Mutter 11 mit einem Gegengewinde zum Fixieren der Einrichtung 5.

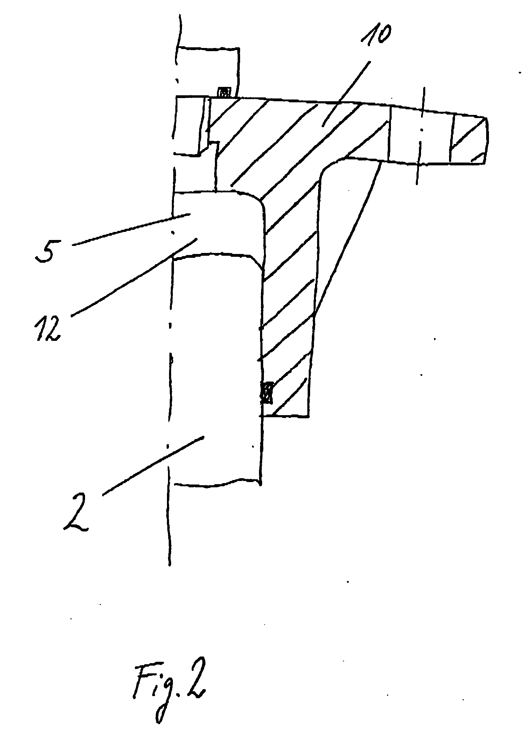

Figur 2 zeigt eine Primärfeder 1 gemäß Figur 1, wobei die Einrichtung 5 in dieser Ausführung gemäß der Erfindung ein hydraulisches Wirkprinzip aufweist. Dazu ist das Auflager 2 als Kolben ausgebildet und der Flansch 10 als Zylinder, der das Auflager 2 aufnimmt und dabei einen Zylinderinneraum 12 einschließt, der mit einer inkompressiblen Hydraulikflüssigkeit befüllt ist. Der Druck und damit das Höhe der Einrichtung 5 werden durch einen extern angeordneten Druckgeber bestimmt. Die Befüllung des Zylinderinnenraums 12 erfolgt erfindungsgemäß manuell über ein Ventil. Die Einrichtung 5 kann auch mit einer Anordnung gemäß Figur 1 kombiniert sein, wobei die Anordnung gemäß Figur 1 der Sicherung der Höhe dient.

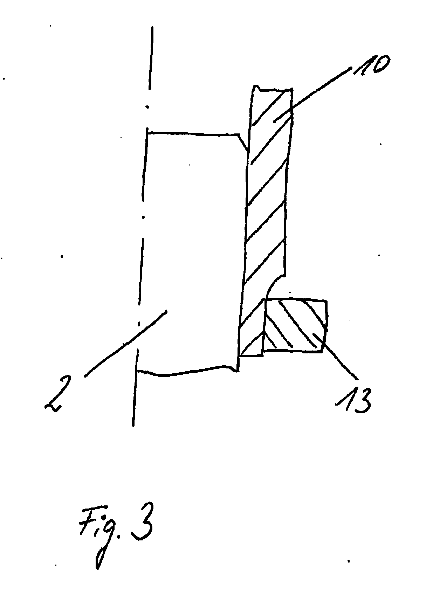

Figur 3 zeigt eine Variante zur Sicherung der durch die Einrichtung 5 eingestellten Höhe. In dieser Ausführung erfolgt eine Fixierung des Flansches 10 an dem Traglager über eine Spannvorrichtung 13, die einen lösbaren Presssitz erzeugt.

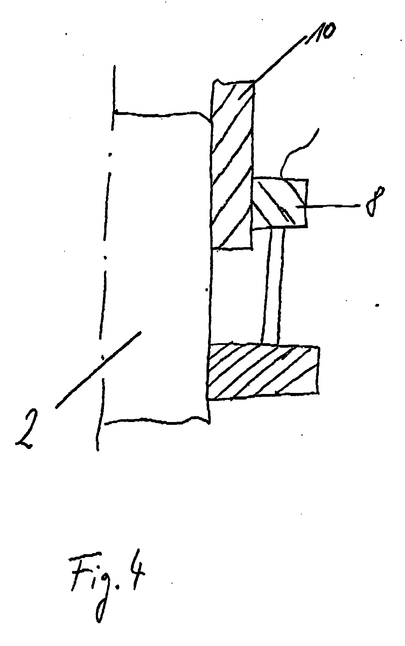

Figur 4 zeigt eine Messeinrichtung 8 zur Abstandsmessung, die in die Einrichtung 5 integriert ist. Die Messeinrichtung weist ein optisches Messprinzip auf und die Höhenanpassung der Einrichtung 5 erfolgt in Abhängigkeit des durch die Messeinrichtung 8 bestimmten Abstands erfolgt.

## Patentansprüche

1. Primärfeder (1) zum Einsatz in Drehgestellen schienengebundener Fahrzeuge, umfassend ein Traglager (2) und ein Auflager (3) die durch eine konusförmige Feder (4) aus einem elastomeren Material miteinander verbunden sind, wobei dem Auflager (2) und/oder dem Traglager (3) eine Einrichtung (5) zur Höhenanpassung der Primärfeder (1) zugeordnet ist, **dadurch gekennzeichnet, dass** die Einrichtung (5) eine Kolben-/Zylindereinheit mit einem Zylinderinnenraum (12) umfasst, wobei der Kolben hydraulisch verstellbar ist, wobei ein Ventil vorgesehen ist, um den Zylinderinnenraum manuell zu befüllen.

2. Primärfeder nach Anspruch 1, **dadurch gekennzeichnet, dass** die Einrichtung (5) zumindest eine Messeinrichtung (8) zur Abstandsmessung umfasst.

3. Primärfeder nach Anspruch 2, **dadurch gekennzeichnet, dass** die Höhenanpassung der Einrichtung (5) in Abhängigkeit des durch die Messeinrichtung (8) bestimmten Abstands erfolgt.

## Claims

1. Primary spring (1) for use in bogies of rail-bound vehicles, comprising a support bearing (2) and an expansion bearing (3), which are connected to one another by a conical spring (4) made of an elastomer material, wherein a device (5) for adapting the height of the primary spring (1) is assigned to the expansion bearing (2) and/or the support bearing (3), **characterized in that** the device (5) comprises a piston-cylinder unit with a cylinder interior (12), wherein the piston can be hydraulically adjusted, wherein a valve is provided for manually filling the cylinder interior.

2. Primary spring according to Claim 1, **characterized in that** the device (5) comprises at least one measuring apparatus (8) for measuring distance.

3. Primary spring according to Claim 2, **characterized in that** the adaptation of the height of the device (5) is carried out as a function of the distance which is determined by the measuring apparatus (8).

## Revendications

1. Ressort primaire (1) destiné à l'utilisation dans des bogies de véhicules ferroviaires, comprenant un palier de support (2) et un appui (3) qui sont connectés l'un à l'autre par un ressort (4) de forme conique en matériau élastomère, un dispositif (5) pour l'adaptation en hauteur du ressort primaire (1) étant associé à l'appui (2) et/ou au palier de support (3), **caractérisé en ce que** le dispositif (5) comprend une unité cylindre/piston comprenant un espace interne de cylindre (12), le piston pouvant être réglé hydrauliquement, une soupape étant prévue pour remplir manuellement l'espace interne de cylindre.

2. Ressort primaire selon la revendication 1, **caractérisé en ce que** le dispositif (5) comprend au moins un dispositif de mesure (8) pour la mesure de distance.

3. Ressort primaire selon la revendication 2, **caractérisé en ce que** l'adaptation en hauteur du dispositif (5) s'effectue en fonction de la distance déterminée par le dispositif de mesure (8).
